Europäisches Patentamt

European Patent Office

Office européen des brevets

(19)

(11) Publication number: **0 427 952 A1**

# EUROPEAN PATENT APPLICATION

(12)

(21) Application number: **90119059.5**

(22) Date of filing: **04.10.90**

(51) Int. Cl.⁵: **F02C 9/28**, F02C 9/54

(30) Priority: **16.11.89 US 441010**

(43) Date of publication of application:
**22.05.91 Bulletin 91/21**

(84) Designated Contracting States:
**CH DE FR GB IT LI NL SE**

(71) Applicant: **WESTINGHOUSE ELECTRIC CORPORATION**
**Westinghouse Building Gateway Center**
**Pittsburgh Pennsylvania 15222(US)**

(72) Inventor: **Hobbs, Milton M.**

**1895 Spring Valley Drive**
**Springfield, Pennsylvania, 19064(US)**
Inventor: **Kiscaden, Roy William**
**1703 Seneca Boulevard**
**Winter Springs, Florida 32708(US)**
Inventor: **Wescott, Kermit Richard**
**671 Saranac**
**Winter Springs, Florida 32708(US)**

(74) Representative: **Fleuchaus, Leo, Dipl.-Ing. et al**
**Melchiorstrasse 42**
**W-8000 München 71(DE)**

(54) Apparatus and method for combustion turbine generator overfuel limiting.

⑤ In a combustion turbine-generator temperatures are prevented from exceeding a predetermined limit by regulating its fuel supply so that a multidimensional data base having at least three variables including compressor inlet air temperature, compressor inlet guide vanes' position, and generator load limit is generated and stored in a digital computer; the compressor inlet air temperature and the compressor inlet guide vanes' position are monitored signals indicative of the compressor inlet air temperature and the compressor inlet guide vanes' position are sensed and periodically a unique data point based on the multidimensional data representation corresponds to the monitored compressor inlet air temperature, the monitored compressor inlet guide vanes' position, and a given generator load limit is determined, and a control signal is supplied by the digital computer to the combustion turbine for preventing the combustion turbine from exceeding the predetermined limit during operations of the combustion turbine.

Fig. 1

# APPARATUS AND METHOD FOR COMBUSTION TURBINE GENERATOR OVERFUEL LIMITING

The present invention is related generally to the field of combustion turbines, and more particularly to methods and apparatus for preventing turbine overfueling or excessive "firing temperature" conditions in electric generating plants which employ such combustion turbines.

It also relates generally to the following patents:

U.S. Patent No. 3,866,108
U.S. Patent No. 3,875,380
U.S. Patent No. 3,919,623
U.S. Patent No. 4,283,634
U.S. Patent No. 4,308,463
U.S. Patent No. 4,380,146

each of which is assigned to the assignee of the present invention and is incorporated herein by reference.

Combustion turbines (also known as "gas turbines") can be damaged if their "firing temperature" exceeds the design limits of the turbine's internal component parts. There are many different temperatures within the turbine that must be taken into consideration. For example, the temperature at a point within the center of a flame from a single combustor basket is generally referred to as the "flame temperature". Such flame temperatures are of little value in turbine control systems, however, since they do not represent the actual temperatures to which sensitive components of the turbine are exposed.

A "blade path temperature" is also generally known within the field of combustion turbines to refer to the average temperature at the exit of the turbine element of a combustion turbine. That is, a plurality of high response thermocouples are most frequently symmetrically arranged about the exit of the turbine element in order to accomplish the blade path temperature sensing of the gases discharged from each individual combustor baskets, after such discharged gases pass the last row of blades in the turbine element. Monitoring of these blade path temperatures is useful for the detection of problems in any one combustor basket of the turbine, but such blade path temperatures are not very reliable in protecting sensitive components of the turbine from any excessive "firing temperatures".

As that term is generally known within the field of combustion turbines, a "firing temperature" of a turbine refers to the temperature which the first row of blades within the turbine element is exposed to. Conventional turbine elements comprise high temperature alloy rotor blades which are mounted on discs to form a plurality of disc assemblies. Individual blade roots are cooled by air that is extracted from the outlet of the compressor portion of the turbine, and is passed through a coolant system in a well known manner. Cooling air also passes over each of the turbine discs to provide a relatively constant low metal temperature over the unit's operating load range.

It can be readily appreciated, therefore, that the "blade path temperature" discussed herein above would be relatively lower than the "firing temperature", because the locations where such firing temperatures would be taken (i.e., at the first row of blades) would not be as cool as the locations where the blade path temperatures would be taken (i.e., at the last row of blades) due to the presence of the previously described cooling means.

While the term "firing temperature" as is generally accepted and used here in refers to the temperature of combustion gases at the first row of blades in a turbine element, such a temperature is also sometimes referred to as a "cycle temperature" with simple cycle turbines. However, with combined cycle turbines, the term "cycle temperature" may refer to the temperature of well-mixed gases in the exhaust stack of the combustion turbine.

Accordingly, whether "firing temperature" or "cycle temperature" is used herein, those terms shall refer to the temperature of combustion gases at the first row of blades in the turbine element. The temperatures at this location become most important when considering problems of protecting sensitive components of the turbine.

Excessive firing (or cycle) temperatures can occur as a result of a condition of "overfueling" the turbine. During such an overfueling condition, the fuel-air ratio within the combustion portion of the turbine can be such that the firing temperature will increase to a sensitive component-damaging level if left uncontrolled. However, firing temperatures can be controlled by regulating fuel flow, as well as air flow, to the turbine such that the resulting fuel-air ratio does not become objectionable.

Various systems have been disclosed as controlling the fuel-air ratio by regulating either fuel flow or air flow, especially during periods of acceleration or other transient turbine states. U.S. Patent No. 3,232,053 -- Rogers et al., for example, discloses a fuel feed and power control apparatus for combustion engines, such as a jet engine, which controls the fuel flow based on the parameters of compressor inlet air temperature, pressure and compressor speed. Fuel flow is regulated by a pair of three-dimensional cam surfaces, and the selection of a particular cam surface for controlling the fuel flow is dependent upon whether the engine is in a governing (i.e., "steady state") or acceleration (i.e., "transient state") mode.

Each cam surface in the Rogers et al. patent is specifically contoured to provide a predetermined fuel schedule. A cam follower which rides one of the cam surfaces, causes a metering valve to present more or less fuel to the engine. After a given cam surface is selected, the compressor speed and compressor inlet air temperature parameters are sensed for use in generating electromechanical signals which cause rotational and axial movement of the cam surface, such that different predetermined points on the cam surface (i.e., different fuel schedules) are brought to bear on the cam follower. Thereafter, and depending on the compressor speed and inlet air temperature sensed, a particular fuel flow is utilized. As is readily apparent, however, a major problem with such a system is its mechanical complexity.

Other known control systems include U.S. Patent No. 3,938,321 -- Davis et al., which discloses a gas turbine control that uses the parameters of engine inlet air temperature, gas generator speed and turbine inlet air temperature for controlling the provision of fuel and the setting angle of the power turbine nozzle; as well as U.S. Patent No. 4.041,694 -- Lewis, which discloses a combustion temperature control that regulates the "local flame temperature" of a combustor in a gas turbine engine within prescribed limits by controlling air flow and fuel flow to the turbine until a desired temperature is achieved. More or less air and fuel is provided to a particular burner, according to the Davis et al. patent, depending on the sensed temperature in the flame region of that burner.

A similar problem with both of the above systems, however, is their requirement for measuring either the "flame temperature" (as that term is defined herein), or the temperature of the gas entering the turbine element. Such measurements are difficult and often imprecise due to the nonuniformity of the temperature being measured (i.e., the temperatures measured at different inlets or internal locations will yield different results).

Representative of the above-noted related patents to the invention herein, U.S. Patent No. 3,866,108 -- Yannone et al. is directed to a digital computer-based control system for gas turbine devices, such as a gas turbine power plant.

A plurality of computer input signals, representing different operational parameters of the gas turbine such as temperature, pressure, speed, vibration, and voltage, are used by the digital computer to control an overall operating condition of the gas turbine. Specifically, speed is used to generate a "control signal output" (or CSO) which comprises a fuel demand signal. Such CSO is used to regulate the fuel flow to the turbine and thus, its "firing temperature".

The generated CSO is compared to a high and a low limit signal for fuel demand and if such generated CSO falls within those limits, it is utilized to control a supply of fuel to the turbine. The low limit signal is fixed such that a minimum amount of fuel is continuously supplied during operation of the turbine to prevent its experiencing a "flame out" condition. The high limit signal, on the other hand, is computer-generated, is based upon particular process variables (i.e., turbine speed, plant megawatt output, combustor shell pressure, and turbine exhaust temperature), and is generated so that design limits are not exceeded.

One of the drawbacks of the Yannone et al. system is, again, its measurement of a temperature that is not uniform and is extremely difficult to measure because of the surrounding environment.

Another problem associated with the Yannone et al. system, like other systems which utilize measuring devices (e. g., thermocouples), is that the time constants of such temperature measuring devices depreciate the overall ability of the systems to protect against rapid increases in fuel flow. A Yannone et al.-type system is also problematic because of its placement of temperature and pressure measuring devices in areas within the turbine that are potentially hazardous. Such devices can fail, and virtually eliminate the protection offered by the overall system.

It is the principal object of the invention to provide an apparatus and method for combustion turbines which prevents conditions of overfueling therein and which protects them from excessive firing or cycle temperatures, but which does not rely on complex measurements of turbine exhaust temperature or combustor shell pressure.

With this object in view, the present invention resides in a method of regulating flow of fuel to a combustion turbine including a compressor with an inlet and a plurality of variably-positionable guide vanes at the inlet, characterized in that a multidimensional data base is generated having values of at least two independent variables including compressor inlet air temperatures and compressor inlet guide vanes' positions, and values of fuel flow to the combustion turbine which are a function of each said independent variable and are adapted to prevent turbine operation at excessive firing temperatures, said generated multidimensional data base being stored in computer means coupled to control a plurality of operating parameters of the combustion turbine, that the combustion turbine is monitored with sensor means to determine its compressor inlet air temperature and its compressor inlet guide vanes' position in order to output a pair of signals indicative, respectively, of said monitored compressor inlet air temperature and said monitored compressor inlet guide vanes' position, that said computer means is operated, with said generated multidimensional data base stored therein, to receive, from said sensor means, said pair of signals which are indicative of said monitored compressor inlet air temperature and said monitored compressor inlet guide vanes' position, and to periodically determine a unique data point upon a surface of said generated multidimensional data base that corresponds to said monitored compressor inlet air temperature, said monitored compressor inlet guide vanes' position, and a given flow of fuel to the combustion turbine, and that a control signal is output from said computer means to the combustion turbine for controlling the flow of fuel to the combustion turbine based upon said given flow of fuel corresponding to said unique data point.

In accordance with a first embodiment of the present invention, the data base may be generated simply by operating the turbine-generator to determine the two independent variables of:

(1) generated megawatts load as a function of the compressor inlet guide vanes' positions; and

(2) generated megawatts load as a function of the compressor inlet air temperatures. For each of the compressor inlet guide vanes' positions (e.g., $0°$, $7°$, $22°$ and $37°$), there is a unique generated megawatt load at which a safe firing temperature will be exceeded; likewise, for each of the compressor inlet air temperatures. These unique generated megawatt loads are also referred to as the maximum (rated) loads.

When these two independent variables are plotted together (i.e., when the generated megawatts load as a function of the compressor inlet guide vanes' positions, and the generated megawatts load as a function of the compressor inlet air temperatures are superimposed orthogonally), they form a three-dimensional surface upon which a control of the turbine-generator may be reliably based. The turbine-generator may be operated at combinations of generated megawatts loads, compressor inlet air temperatures, and compressor inlet guide vanes' positions that are below such surface without fear of exceeding safe firing temperatures. On the other hand, the turbine-generator may also be prevented from operating at combinations of generated megawatts loads, compressor inlet air temperatures, and compressor inlet guide vanes' positions that would lead to firing temperatures which exceed safe levels.

Alternatively, and in accordance with a second embodiment of the present invention, the data base may be generated empirically by well known techniques such as linear regression. There are known computer programs that can simulate the generated megawatts loads as a function of compressor inlet guide vanes' positions, and generated megawatts loads as a function of compressor inlet air temperatures, and the algorithms of such known computer programs are adaptable for specific operating conditions through tools such as linear regression. As in the case of the data base which is generated through operating the turbine-generator and determining various data points in accordance with the first embodiment of the present invention, the empirically-generated data base includes for each compressor inlet guide vanes' position a unique generated megawatt load at which a safe firing temperature will not be exceeded; likewise, for each of the compressor inlet air temperatures. The empirically-generated data base is plotted as above to form a three-dimensional surface upon which a control of the turbine-generator may be reliably based.

One drawback to the utilization of such empirical or mathematical tools, however, is that there are a number of dependent variables to be considered (e.g., compressor inlet air pressure, the degree of cleanliness of the turbine, the type of fuel burned in the turbine, the use of evaporative water inlet air cooling, and the use of steam injection) which can affect the contour of the multidimensional surface, and which can themselves become variables for the function generated.

For example, the use of evaporative water inlet air cooling will not only change the temperature of the compressor inlet air, but will also inject water vapor within the mass flow of air into the turbine and will thereby increase the compressor inlet air pressure. Operational generation of the data base would take such dependent variables into consideration since they would affect the functions of generated megawatts loads versus compressor inlet guide vanes' positions, and generated megawatts loads versus compressor inlet air temperatures. The generation of such data base by empirical means, on the other hand, would require calculation of a number of dependent variables that would be difficult to factor in.

The present invention will become more readily apparent from the following description of a preferred embodiment thereof, shown, by way of example only in the accompanying drawings wherein:

Figure 1 is a block diagram of the present invention in relation to a combustion turbine-generator;

Fig. 2 is an orthogonal sectional view of an axial flow combustion turbine that is shown in block form in Fig. 1;

Fig. 3 is a flow chart of those operations to be utilized in the present invention of Fig. 1; and

Fig. 4 diagrammatically illustrates a surface of the multidimensional database in accordance with the preferred embodiment of the present invention.

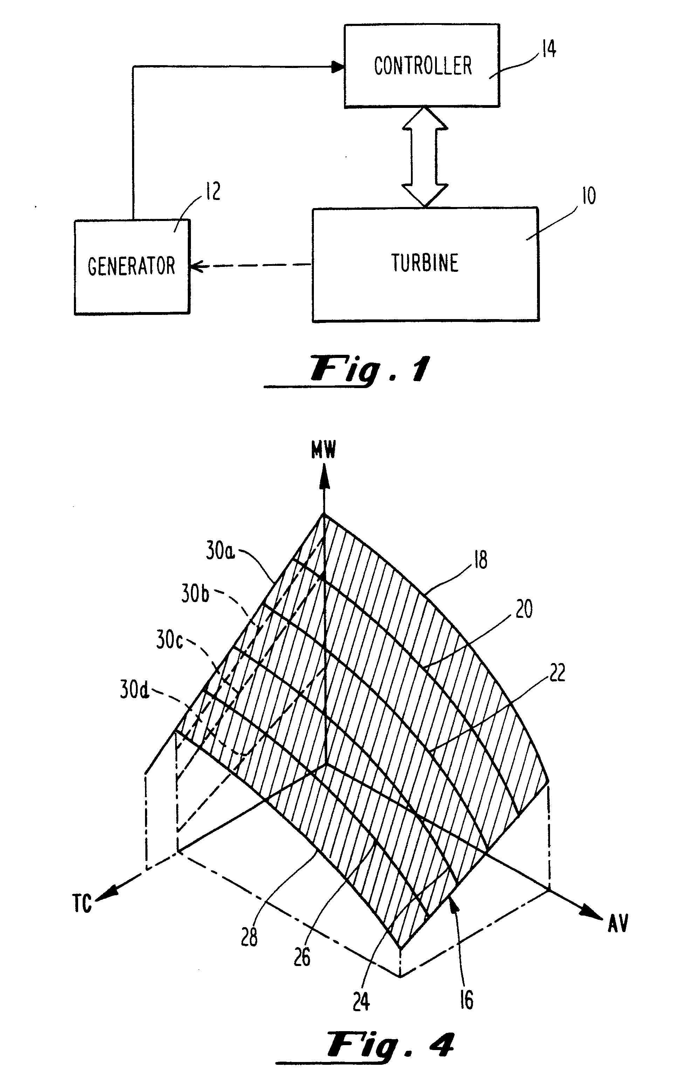

Generally, a combustion turbine power plant shown in Fig. 1, includes a combustion turbine 10 which is mechanically connected in any known manner to generator 12. Rotational movement of turbine 10 causes generator 12 to provide electrical power. It will be understood that various combinations of turbines and generators are possible in order to provide a desired power output from generator 12 within prescribed load limits. The only requirement of the present invention is that turbine 10 have variably-positionable compressor inlet guide vanes, the purpose of which will be set forth more fully herein.

A controller 14 is arranged to send and receive a plurality of signals S to and from the turbine 10. The signals S received by the controller 14 are typically reflective of various conditions within the turbine 10, while the signals S sent to the turbine 10 provide for a control of the turbine 10. One manner in which the controller 14 may be implemented in accordance with the present invention is described more fully in U.S. Patent No. 3,866,108 -- Yannone et al. A preferable manner in which the controller 14 is implemented according to the present invention, however, is by using a computer (not shown) such as a personal computer having a data base 16 with multidimensional characteristics and a plurality of parameters 18-30 (Fig. 4) to control operations of the turbine-generator 10, 12.

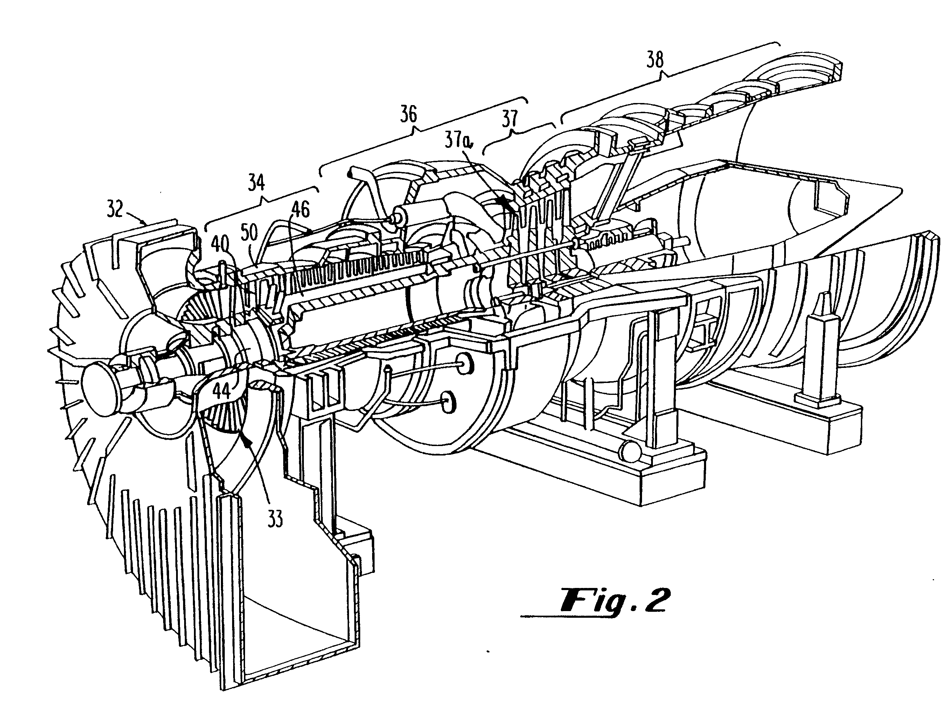

Referring back to Fig. 2, it can be seen that the turbine 10 generally comprises an inlet portion 32, a compressor-portion 34, a combustor portion 36, a turbine element 37, and an exhaust portion 38. Inlet portion 32 includes a plurality of variably-positionable compressor inlet guide vanes in an assembly 33 supported across the inlet portion 32 in a conventional manner to vary the airflow through the turbine 10. The angle at which all of the guide vanes are disposed in relation to the gas stream is uniform and typically controlled by a pneumatically operated positioning ring coupled to the guide vanes in the assembly 33, as is well known.

Air entering the turbine 10 at its inlet portion 32 is compressed adiabatically in compressor portion 34, is mixed with a fuel, and is heated at constant pressure in the combustor portion 36. The heated fuel/air gases are thereafter discharged from the combustor portion 36, via the turbine element 37, through exhaust portion 38 with a resulting adiabatic expansion of the gases completing the basic combustion turbine cycle. "Firing" (or cycle) temperatures, as those terms are defined herein above, are experienced within the turbine element 37 at a first row of blades 37a therein.

In order to ensure that a highly efficient, high pressure ratio is maintained within the turbine 10, the compressor portion 34, like most compressor portions of conventional combustion turbines, is of an axial flow configuration having a rotor 40. The rotor 40 includes a plurality of rotating blades 42 which are axially disposed along a shaft 44, and a plurality of discs 46. Each adjacent pair of the plurality of rotating blades 42 is interspersed by one of a plurality of stationary blades 48, mounted to the turbine casing 50.

Further details regarding structural, operational and plant performance characteristics of a conventional combustion turbine-generator 10, 12 may be found in the patents above which have been incorporated herein by reference, especially U.S. Patent No. 4,283,634--Yannone et al. and U.S. Patent No. 4,308,463 -- Giras et al.

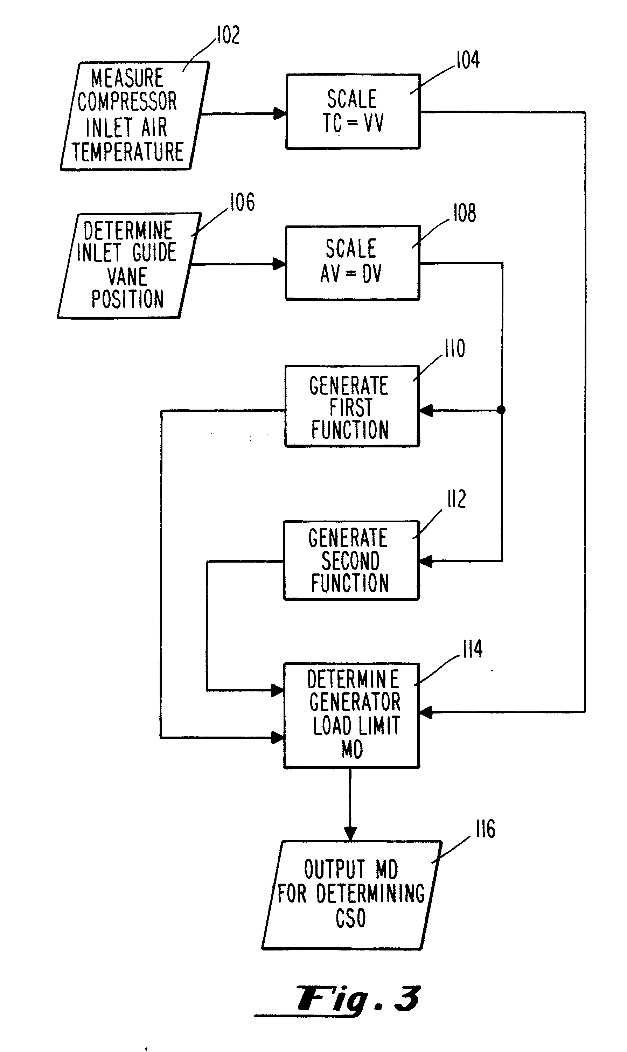

As is described more fully herein below in regards to Figs. 3 and 4, a simple algorithm may be utilized in accordance with the present invention for operations of the controller 14 in order to ultimately control firing (or cycle) temperatures within the turbine 10. A pair of independent variables indicative, respectively, of compressor inlet air temperature and compressor inlet guide vanes' position are input to this algorithm to formulate an output variable, in the form of generator load limit, which is subsequently used to prevent excessive firing (or cycle) temperatures.

The algorithm, as is shown in flow chart format in Fig. 3, uses two basic input variables:

(1) compressor inlet air temperature TC; and

(2) compressor inlet guide vanes' position AV. Initially, the compressor inlet air temperature TC is measured at step 102 and input at step 104 for scaling. Such compressor inlet air temperatures TC, as is well known, are measured by conventional means (e.g., by thermocouples as described in greater detail in U.S. Patent No. 4,283,634 -- Yannone et al. and in U.S. Patent No. 4,308,463 -- Giras et al.).

For the compressor inlet guide vanes' position AV, the AV input is derived in a conventional manner from an inlet guide vane position demand signal or, as is shown at step 106, may be measured by conventional transducer means to determine the actual inlet guide vane position. The derivation of such inlet guide vane position demand signal, and the transducer means to determine the actual inlet guide vane position, are described in great detail in the patents above which have been incorporated herein by reference, especially U.S. Patent No. 4,283,634--Yannone et al. and U.S. Patent No. 4,308,463 -- Giras et al.

In either case, the derived compressor inlet guide vane position AV is subsequently input at step 108 for scaling. A scaled value DV that is determined at step 108 is further input at steps 110 and 112 to generate a pair of functions. These functions, the derivation of which is explained in greater detail herein below, are both then input at step 114, along with a scaled value VV determined at step 104, for determining a generator load limit MD at step 114. Thereafter, the determined generator load limit MD is output for utilization at step 116 to determine a fuel flow demand corresponding to the generator load limit MD by either or both of two ways.

First, the generator load limit MD determined at step 114 may be input to the controller 14 (Fig. 1) to replace the fixed megawatt limit signal typically used. In a controller 14 having a known "Powerlogic" Control System which incorporates the Woodward Analog Control System (manufactured by Woodward Governor Co. of Fort Collins, CO), the generator load limit MD determined at step 114 replaces the fixed megawatt limit signal that is set by potentiometer R12 on the Analog Control System card 1A13. Thus, the new input would provide a variable setpoint for the conventional proportional plus integral (PPI) megawatt limiting controller within the Powerlogic Control System, having as its feedback signal a measured generator load. In such a manner, and as is well known, the PPI megawatt limiting controller thereafter sets the high limit for the fuel flow demand signal, or control signal output (CSO).

Second, the generator load limit MD determined at step 114 could also be used for open loop high limiting of CSO with the addition of a simple equation (e.g., $y = ax + b$, where a is a proportionality constant associated with changes in CSO and megawatts, and b is the value of CSO required to idle or operate the turbine at no load) to compensate for the relationship existing between CSO and generator megawatts.

In either or both of the above applications of the generator load limit MD determined at step 114, the MD output to step 116 provides additional protection for the turbine 10 than that which is presently provided by known controllers 14 (e. g., a Powerlogic Control System which uses a Woodward Analog Control System). That is, in spite of the "loss" of the megawatt feedback signal which would thereby eliminate the limiting provided by the PPI megawatt controller, the open loop limiting of CSO would remain in effect whether the generator 12 is producing measured megawatts or is "off-line".

The algorithm of Fig. 3, restated as shown below, is exemplary of the presently preferred embodiment of this invention when incorporated within a conventional turbine 10, such as a Westinghouse Model W501-D5 combustion turbine. As used hereinafter, the input variables include compressor inlet air temperature TC (measured in degrees Celsius) and compressor inlet guide vanes' position AV (which is typically 10 volts DC at the maximum opening of 0° angle and 0 volts DC at the minimum opening of 37° angle), and the output variable is generator load limit MD (which is typically 0 volts DC at no-load or 0 megawatts and 10 volts DC at 150 megawatts). The "READ" variables J0, J1, J2, J3, K0, K1, K2 and K3 represent the coefficients 126.2, 2.792, .24, .042, .689, .003, .0008 and .00032, respectively, for a site specific turbine-generator. However, such "DATA" and the power to which they are applied may be changed to fit other turbine-generators. For example, the coefficients will change with changes in compressor inlet pressure, compressor and turbine cleanliness, kind of fuel burned, and the use of evaporative water inlet air cooling and steam injection. One of ordinary skill in the art would nevertheless be capable of determining these coefficients without undue experimentation merely by applying a best-fit approach to the resolution of the equations for V1 (i.e., "first function") and V2 (i. e., "second function"), knowing the relationship of the equations for VV, DV and MD.

READ J0, J1, J2, J3, K0, K1, K2, K3
DATA 126.2, 2.792, .24, .042, .689, .003, .0008, .00032
VV = TC + 20
DV = 10 - AV
V1 = -K0 + K1 * DV - K2 * (DV)² + K3 * (DV)³
V2 = +J0 - J1 * DV + J2 * (DV)² - J3 * (DV)³
MD = (VV * V1 + V2)/15

Shown below in tabular form below are the megawatt limits (Limit:) which are produced by utilizing the above algorithm, and the megawatt "data" (Data:) which represents the linearized calculated performance of a Westinghouse Model W501-D5 turbine. Such "limits" represent the maximum megawatt loads that are generated without exceeding the safe firing temperature of the turbine-generator, as determined in accordance with the present invention. That is, these limits would prevent excessive firing temperatures in the turbine-generator by preventing the fuel flow thereto from increasing to meet generated megawatts load demands above such limits. By comparison, the "data" represent the maximum megawatt loads that would be generated without exceeding the safe firing temperature of a hypothetical turbine-generator, as determined by a known simulative computer program for a Westinghouse Model W501-D5 turbine.

It is likely that these "limits" in actual applications would be raised slightly to avoid their reducing the capability of the combustion turbine power plant.

Of course, this would depend upon whether the generator load limit MD and CSO that would be determined in accordance with either of the preferred embodiments of the present invention would, thereafter, be utilized as a "limiting" controller or a "manual" controller. That is, the amount of adjustment necessary would depend upon whether such output variables would be used to actually control the fuel flow to the turbine 10, or merely to provide an upper limit of such fuel flour to prevent excessive firing (or cycle) temperatures.

| | AV ($^\circ$) Guide Vane Positions | | | |
|---|---|---|---|---|
| TC $^\circ$C ($^\circ$F) | 0 | 7 | 22 | 37 |
| -18 (0) Limit: | 124.7 | 120.0 | 107.9 | 79.3 |
| Data: | 123.1 | 119.2 | 108.2 | 81.6 |
| - 8 (20) Limit: | 117.0 | 112.4 | 100.8 | 74.7 |
| Data: | 116.7 | 112.1 | 101.0 | 76.3 |
| 4 (40) Limit: | 109.4 | 104.8 | 93.8 | 70.4 |
| Data: | 109.5 | 104.6 | 94.2 | 71.3 |
| 15 (59) Limit: | 102.1 | 97.6 | 87.1 | 65.6 |
| Data: | 102.1 | 97.3 | 87.9 | 66.8 |
| 27 (80) Limit: | 94.0 | 89.6 | 79.8 | 60.7 |
| Data: | 93.9 | 89.2 | 80.0 | 62.0 |
| 38 (100) Limit: | 86.4 | 82.0 | 72.7 | 56.1 |
| Data: | 85.9 | 81.5 | 73.1 | 57.7 |
| 49 (120) Limit: | 78.7 | | | |
| Data: | 78.1 | | | |

Referring now more specifically to Fig. 4, there is shown a surface (lightly shaded) of the multidimensional data base in accordance with the preferred embodiment of the present invention. The surface 16 is formed by the intersecting plurality of data points that correspond to a pair of independent variables (e.g., compressor inlet air temperature TC and compressor inlet guide vanes' position AV) as they relate to a maximum (rated) load. As was previously noted herein above, the megawatts MW output by the turbine-generator 10, 12 is a function of both the compressor inlet air temperature TC and the compressor inlet guide vanes' position AV.

The turbine-generator 10, 12 may, thus, be safely operated at combinations of generated megawatts loads MW, compressor inlet air temperatures TC, and compressor inlet guide vanes' positions AV that are below such surface 16 without fear of demanding a fuel flow that would lead to excessive safe firing temperatures. On the other hand, the turbine-generator 10, 12 may also be prevented from operating at combinations of generated megawatts loads MW, compressor inlet air temperatures TC, and compressor inlet guide vanes' positions AV that would lead to firing temperatures which exceed safe levels. The surface 16 merely represents all of the maximum (rated) loads that correspond to the generator load limit signals MD of the algorithm above which would prevent further increases in fuel flow to the turbine 10 and, thus, prevent excessive firing temperatures.

Accordingly, the multidimensional data base shown in Fig. 4 is formed by projecting the two-dimensional function of compressor inlet guide vanes' positions AV versus megawatts output by the turbine-generator 10, 12 MW on the two-dimensional function of compressor inlet air temperature TC versus megawatts MW. In this three-dimensional data base that results from this preferred embodiment of the present invention, therefore, the Z or common axis is megawatts output by the turbine-generator 10, 12, while the X and Y axes are the compressor inlet guide vanes' positions and the compressor inlet air temperatures, respectively.

As shown in Fig. 4, the curved solid lines upon the lightly shaded surface 16 respectively illustrate output megawatts MW as a function of the compressor inlet guide vanes' position for a compressor inlet air temperature TC of -18$^\circ$C (0$^\circ$F) (18), -8$^\circ$C (20$^\circ$F) (20), 4$^\circ$C (40$^\circ$F) (22), 15$^\circ$C (59$^\circ$F) (24), 27$^\circ$C (80$^\circ$F) (26), and 38$^\circ$C (10$^\circ$F) (28). The dashed lines that are projected upon the MW-TC plane of Fig. 4 respectively illustrate output megawatts MW as a function of the compressor inlet air temperature TC for a compressor inlet guide vanes' position AV of 7$^\circ$ position AV of 7$^\circ$ (30b), 22$^\circ$ (30c) and 37$^\circ$ (30d). Solid line 30a, furthermore, illustrates the output megawatts MW as a function of the compressor inlet air temperature TC for a compressor inlet guide vanes' position AV of 0$^\circ$.

As is readily apparent from the above, when the solid lines 18, 20, 22, 24, 26 and 28 are appropriately

7

projected from the MW-AV plane, and the solid line 30a is projected from the MW-TC plane in conjunction with the dashed lines 30b, 30c and 30d, they intersect to generate together a multidimensional data base which is represented by the area at and below the surface 16 shown in Fig. 4.

It should be noted that, while Fig. 4 illustrates the generated megawatts load MW as a function of both of the independent variables compressor inlet guide vanes' position AV and compressor inlet air temperature TC, the foregoing assumes the typical relationship of generator load limit MD to fuel flow demand CSO. Actually, the generator load limit MD, as is well known, is a function of the compressor inlet guide vanes' position and the compressor inlet air temperature. As explained herein above, the generator load limit is conventionally used to determine the fuel flow demand signal (also referred to as the control signal output CSO), such as by using a PPI controller. There are generated megawatts loads MW, however, above which excessive firing temperatures would be experienced if the fuel flow were allowed to increase without limit. Such generated megawatts loads are known as the maximum (rated) loads, and it is those loads that are shown on the surface 16 of Fig. 4. It can therefore be appreciated that not only are the generated megawatts loads MW a function of the compressor inlet guide vanes' positions and the compressor inlet air temperatures, but the generator load limit MD and the fuel flow demand CSO are also functions of the compressor inlet guide vanes' positions and the compressor inlet air temperatures. A given generator load limit MD, as well as a given fuel flow demand CSO, will correspond to a given combination of compressor inlet guide vanes' position and compressor inlet air temperature.

If the generated megawatts load MW is below the given generator load limit MD determined in accordance with the present invention, there is no risk of demand for fuel flow that would lead to an excessive firing temperature for that given combination of compressor inlet guide vanes' position and compressor inlet air temperature. If the generated megawatts load MW is on the surface 16 of Fig. 4, however, it will equate to the generator load limit MD above which further increases in fuel flow demand CSO would lead to excessive firing temperatures. Accordingly, the generator load limit MD, the fuel flow demand CSO and ultimately the generated megawatts load MW can be controlled in accordance with the present invention as a function merely of compressor inlet guide vanes' position and compressor inlet air temperature.

That is, while the megawatts load which can be generated by the turbine-generator 10, 12 is a function of the two variables of compressor inlet air temperature and compressor inlet guide vanes' position, it is also a function of the fuel flow to the turbine 10. Therefore, the multidimensional database according to the present invention is suitably defined by the generated megawatts load merely as a function of two independent variables (i.e., compressor inlet air temperature and compressor inlet guide vanes' position), or as a function of three variables (i.e., fuel flow to the turbine 10, compressor inlet air temperature and compressor inlet guide vanes' position), or as a function of four variables (i.e., fuel flow to the turbine 10, compressor inlet air temperature, compressor inlet guide vanes' position, and generator load limit). More variables are possible as discussed herein above.

Stated mathematically, the generated megawatts load MW is a function of compressor inlet air temperature TC, or

$$MW = f(TC).$$

However, the generated megawatts load is also a function of compressor inlet guide vanes' position AV, or

$$MW = g(AV).$$

Moreover, the generated megawatts load is a function of the flow of fuel FF to the turbine 10, or

$$MW = h(FF).$$

The generator load limit MD defined above corresponds to a given generated megawatts load, and is proportional to a given flow of fuel to the turbine 10 (corresponding to the given megawatts load) above which an increase in the flow of fuel to the turbine 10 would lead to excessive firing temperatures.

Therefore, the generator load limit MD according to the present invention is a function of the two variables compressor inlet air temperature TC and compressor inlet guide vanes' position AV, or

$$MD = f(TC, AV),$$

as explained herein above with reference to Figs. 3 and 4, and is the simplest form of the function generated to form the multidimensional data base. A multidimensional data base can be formed of three variables in accordance with the present invention, furthermore, since

$$MD\ MW_{max} = f(TC, AV, FF).$$

Because the generator load limit MD as shown above is a function of the compressor inlet air temperature TC, the compressor inlet guide vanes' position AV, and the flow of fuel FF to the turbine 10, the function generated to form the multidimensional data base in accordance with the present invention is also capable of being formed of four variables, wherein

$$F_{control} = f(TC, AV, FF, MW_{max}).$$

Obviously, many modifications and variations are possible in light of the foregoing teachings. If the multidimensional data base that is generated according to the present invention is used to "control" turbine-generator 10, 12, it should be readily apparent that such control would be exercised within the boundaries of that data (e.g., at or beneath the surface 16 shown in Fig. 4). On the other hand, if that multidimensional data base is used to "limit" generator load limits in order to prevent excessive firing temperatures, such a limiting function would be met by the surface 16 itself. The apparatus and method in accordance with the present invention would, thus, obviate premature damage to the sensitive components of the turbine 10 by preventing the turbine-generator 10, 12 from exceeding hazardous firing (or cycle) temperatures for any given condition or state of operation.

As is readily apparent from the above, the term "compressor inlet guide vanes' position" herein applies equally to a position of the compressor inlet guide vanes that is actually monitored, or to a demand signal for a given position, or any other equivalent means that indicates a desired or actual position of the compressor inlet guide vanes.

Other variables such as the compressor inlet air pressure, degree of cleanliness of the turbine, type of fuel burned in the turbine, use of evaporative water inlet air cooling, and use of steam injection discussed herein above, can also be utilized to provide a surface for other multidimensional data bases without any undue experimentation. For example, a function such as the pressure of air at the compressor inlet will affect not only the generator load limit but also the compressor inlet air temperature since air is more dense at a lower temperature. The degree to which the compressor inlet guide vanes are open will also cause more air to be injected into the turbine. Accordingly, other surfaces of multidimensional data bases may be formed according to the present invention as long as they relate to the megawatts output by the turbine-generator 10, 12.

| IDENTIFICATION OF REFERENCE NUMERALS USED IN THE DRAWINGS | | |
|---|---|---|
| LEGEND | REF. NO. | FIGURE |
| TURBINE | 10 | 1 |
| GENERATOR | 12 | 1 |
| CONTROLLER | 14 | 1 |
| MEASURE COMPRESSOR INLET AIR TEMPERATURE | 102 | 3 |
| SCALE TC-VV | 104 | 3 |
| DETERMINE INLET GUIDE VANE POSITION | 106 | 3 |
| SCALE AV-DV | 108 | 3 |
| GENERATE FIRST FUNCTION | 110 | 3 |
| GENERATE SECOND FUNCTION | 112 | 3 |
| DETERMINE GENERATOR LOAD LIMIT MD | 114 | 3 |
| OUTPUT MD FOR DETERMINING CSO | 116 | 3 |

## Claims

1. A method of regulating flow of fuel (FF) to a combustion turbine (10) including a compressor (34) with an inlet (32) and a plurality of variably-positionable guide vanes (33) at the inlet (32), characterized in that multidimensional data base (16) is generated having values of at least two independent variables including compressor inlet air temperatures (TC) and compressor inlet guide vanes' positions (AV), and values of fuel flow (FF) to the combustion turbine (10) which are a function of each said independent variable and are adapted to prevent turbine operation at excessive firing temperatures, said generated multidimensional data base (16) being stored in computer means (14) coupled to control a plurality of operating parameters of the combustion turbine (10), that the combustion turbine (10) is monitored with sensor means to determine its compressor inlet air temperature (TC) and its compressor inlet guide vanes' position (AV) in order to output a pair of signals (S) indicative, respectively, of said monitored compressor inlet air temperature (TC) and said monitored compressor inlet guide vanes' position (AV), that said computer means (14) is operated, with said generated multidimensional data base stored therein, to receive, from said sensor means, said pair of signals (S) which are indicative of said monitored compressor inlet air temperature (TC) and said monitored compressor inlet guide vanes' position (AV), and to periodically determine a unique data point upon a surface (16) of said generated multidimensional data base that corresponds to said monitored compressor inlet air temperature (TC), said monitored compressor inlet guide vanes' position (AV), and a given flow of fuel (FF) to the combustion turbine (10), and that a control signal (CSO) is output from said computer means (14) to the combustion turbine (10) for controlling the flow of fuel (FF) to the combustion turbine (10) based upon said given flow of fuel (FF) corresponding to said unique data point.

2. A method according to claim 1, characterized in that said multidimensional data base is generated with a surface (16) defined by an intersection of a pair of functions which include said flow of fuel (FF) to the combustion turbine (10) as a function of said compressor inlet air temperatures (TC), and said flow of fuel (FF) to the combustion turbine (10) as a function of said compressor inlet guide vanes' positions (AV), said generated multidimensional data base is stored in said computer means (14) for outputting said control signal (CSO) to the combustion turbine (10).

3. A method according to claim 1 or 2, wherein the combustion turbine (10) is coupled to a generator (12) having an electrical load, characterized in that said multidimensional data base is generated with three variables including said compressor inlet air temperatures (TC), said compressor inlet guide vanes' positions (AV), and generator load limits ($MW_{max}$) corresponding to each said unique data point, that each said generator load limit ($MW_{max}$) is defined by a maximum rated load for which an increase in said flow of fuel (FF) to the combustion turbine (10) above said given flow of fuel (FF) to the combustion turbine (10) results in excessive firing temperatures therein, and that said generated multidimensional data base is stored in said computer means (14) for outputting said control signal (CSO) to the combustion turbine (10) based upon said generator load limit ($MW_{max}$)

4. Apparatus for regulating a flow of fuel (FF) to a combustion turbine (10) including a compressor (34) with an inlet (32) and a plurality of variably- positionable guide vanes (33) at the inlet (34), characterized by function generator means (V1, V2, MD) for generating a multidimensional function of at least three variables including compressor inlet air temperatures (TC), compressor inlet guide vanes' positions (AV), and a flow of fuel (FF) to the combustion turbine (10) which defines a maximum rated load at which the combustion turbine (10) is adapted to operate, computer means (14) for receiving said generated multidimensional function, and for controlling one or more operating parameters of the turbine (10) based upon said generated multidimensional function, and sensor means for monitoring said compressor inlet air temperatures (TC) and said compressor inelt guide vanes' positions (AV), said sensor means outputting a pair of signals (S) to said computer means (14) indicative, respectively, of said monitored compressor inlet air temperature (VV) of said monitored compressor inlet guide vanes' position (DV), wherein said computer means (14), upon receipt of said generated multidimensional function and said pair of signals (S) indicative of said monitored compressor inlet air temperature (VV) and said monitored compressor inlet guide vanes' position (DV), determines a unique data point upon a surface of said generated multidimensional function that corresponds to said monitored compressor inlet air temperature (TC), said monitored compressor inlet guide vanes' position (AV), and a given flow of fuel (FF) to the combustion turbine (10), and outputs a control signal (CSO) to the combustion turbine for preventing the flow of fuel (FF)·to the combustion turbine from exceeding sid given flow of fuel (FF).

5. An apparatus according to claim 4, characterized in that said computer means (14) includes means for outputting a fuel flow control signal (CSO) to the turbine (10) based upon said fuel flow (FF) corresponding to said unique data point.

6. An apparatus according to claim 4 or 5, wherein an electrical load is coupled to the turbine (10), characterized in that said function generator means (V1, V2, MD) comprises means for generating said multi-dimensional function with four variables including said compressor inlet air temperatures (TC), said compressor inlet guide vanes' positions (AV), said flow of fuel (FF) to the combustion turbine (10), and a generator load limit ($MW_{max}$) that corresponds to each said unique data point, each said generator load limit ($MW_{max}$) being adapted to prevent an increase in said flow of fuel (FF) which would lead to excessive firing temperatures, and that said computer means (14) further includes means for outputting said control signal (CSO) to the combustion turbine (10) based upon said generator load limit ($MW_{max}$) corresponding to said determined unique data point.

_**Fig . 1**_

_**Fig . 4**_

*Fig.2*

*Fig. 3*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 550 565 (OZONO)<br>* Abstract; column 4, line 39 - column 5, line 2 *<br>– – – | 1,4 | F 02 C 9/28<br>F 02 C 9/54 |
| A | PATENT ABSTRACTS OF JAPAN, vol. 7, no. 230 (M-249)[1375], 12th October 1983;<br>& JP-A-58 124 010 (TOKYO SHIBAURA DENKI K.K.) 23-07-1983<br>* Whole document *<br>– – – | 1,4 | |
| A,P | EP-A-0 363 301 (UNITED TECHNOLOGIES)<br>* Abstract; page 1, lines 36-45; page 6, lines 54-59; claim 9 *<br>– – – | 1,4 | |
| A | US-A-4 539 810 (WATANABE)<br>– – – | | |
| A | EP-A-0 279 487 (NUOVOPIGNONE INDUSTRIE MEC-CANICHE FONDERIA)<br>– – – | | |
| A | US-A-3 789 665 (HOHENBERG)<br>– – – – – | | |

TECHNICAL FIELDS
SEARCHED (Int. Cl.5)

F 02 C

The present search report has been drawn up for all claims

| Place of search | Date of completion of search | Examiner |
|---|---|---|
| The Hague | 15 February 91 | SERRANO GALARRAGA J. |